# FASCICULE DE BREVET EUROPEEN

(11) **EP 4 439 117 B1**
(45) Date de publication et mention de la délivrance du brevet: **14.01.2026**
(21) Numéro de dépôt: 24162078.0
(22) Date de dépôt: 07.03.2024
(51) Int. Cl.: G01S 7/4914, G01S 7/40, G01S 7/52, G01S 15/931, G01S 13/931, G01S 7/497

(54) **SYSTÈME ET METHODE DE MESURE DE L'ORIENTATION D'UNE SURFACE**
SYSTEM UND VERFAHREN ZUR MESSUNG DER ORIENTIERUNG EINER OBERFLÄCHE
SYSTEM AND METHOD FOR MEASURING THE ORIENTATION OF A SURFACE

(30) Priorité: 31.03.2023 FR 2303195
(43) Date de publication de la demande: 02.10.2024
(73) Titulaire: Renault s.a.s, 92100 Boulogne Billancourt (FR)
(72) Inventeur: BOUILLON, Jean-Charles, 78280 Guyancourt (FR); CAM, Guillaume, 78280 Guyancourt (FR)

(56) Documents cités:
- DE-A1- 10 042 105
- US-B1- 6 418 775

## Description

### Domaine technique

La présente invention concerne la détermination de l'orientation des capteurs à ultrasons utilisés dans le domaine de l'industrie automobile sous l'acronyme « USS » pour l'anglicisme « UltraSonic Sensor » ou sous l'acronyme « UPA » pour l'anglicisme « Ultrasonic Parking Assyst ».

Ces capteurs, généralement au nombre de quatre à six sur un véhicule, sont disposés sur les boucliers avant et/ou arrière du véhicule, pour lui permettre de détecter des obstacles proches.

En réponse à la réglementation Européenne dite « GSR2 », les constructeurs automobiles doivent assurer la conformité des véhicules en production par des mesures d'orientation de ces capteurs.

La présente invention vise à proposer un système de mesure de l'orientation d'une surface d'un tel capteur installé sur une portion de véhicule pour contrôler son positionnement, ainsi qu'une ligne de contrôle aptes à contrôler simultanément le positionnement de plusieurs capteurs installés sur le véhicule, et une méthode de contrôle utilisant le système de mesure.

### Techniques antérieures

Actuellement, pour contrôler l'orientation des capteurs USS et UPA installés sur un véhicule automobile et garantir la conformité de la production, un opérateur réalise manuellement un scan complet du véhicule pour en obtenir une modélisation tridimensionnelle qu'il positionne par rapport à ses quatre roues et à un référentiel, puis il relève trois ou quatre points sur chaque capteur, en déduit divers angles de mesure, et traite ces données informatiquement pour obtenir une orientation du capteur.

Le processus spécifié prend plusieurs heures de travail de technicien spécialisé par véhicule.

De plus, le processus présente des risques d'erreur importants, ce qui entraîne des surcoûts : d'abord, parce que le scan combiné au traitement informatique entraine souvent des facettisations de la modélisation car le capteur est parfois localisé légèrement en retrait du bouclier du véhicule ou dans un funnel, ensuite parce que les différentes saisies des mesures peuvent également entraîner des erreurs.

Dans un autre mode de prise de mesure connu ; en lecture direct de profondeur par laser, il est difficile de mettre en place les lasers qu'il faut placer perpendiculairement à la surface à mesurer, et les points étant proches d'environ douze millimètres, les boîtiers des lasers épais de plusieurs centimètres sont en interférences les uns avec les autres. Les documents DE 100 42 105 A1 et US 6 418 775 B1 présentent des systèmes connus de mesure de l'orientation d'une surface ou d'un capteur.

### Exposé de l'invention

L'invention a pour but de pallier au moins certains des inconvénients précités et de proposer un système permettant la mesure directe de l'orientation des capteurs par un opérateur ou par des moyens de contrôle automatisés, pour le contrôle de la conformité de ces capteurs, le système et son procédé de mise en œuvre étant capables de cumuler des avantages de rapidité, simplicité et fiabilité.

Au vu de ce qui précède, l'invention a pour objet un système de mesure de l'orientation d'une surface pour contrôler l'orientation d'un capteur ou d'un radar pour véhicule, comportant un émetteur photonique apte à émettre un faisceau lumineux directionnel vers une surface plane du dit capteur ou radar pour véhicule, une cible ayant une zone de réception, une structure formant une liaison rigide entre l'émetteur photonique et la cible et configurée pour maintenir l'émetteur photonique et la cible dans une position relative telle qu'une émission d'un faisceau lumineux directionnel par l'émetteur incident sur ladite surface du capteur ou radar pour véhicule entraîne une réflexion au moins partielle dudit faisceau lumineux incident en un faisceau réfléchi jusqu'à la zone de réception. Lorsque le capteur avec ladite surface orientée dans une plage d'orientations admissibles prédéfinie, et la cible étant configurée pour indiquer en lecture directe un défaut d'orientation du capteur en fonction du faisceau réfléchi sur la zone de réception. L'angle d'incidence formé par le faisceau incident sur la surface du capteur est compris entre cinq et soixante-dix degrés, préférentiellement inférieure à trente-cinq degrés.

De préférence, l'émetteur comporte une source lumineuse cohérente telle qu'un laser.

Avantageusement, le système peut être équipé de moyens de contrôle automatisés comportant un détecteur optique adapté pour détecter l'arrivée du faisceau réfléchi sur la zone de réception, les moyens de contrôle automatisés étant couplés à un moyen d'allumage de l'émetteur et configurés pour sanctionner automatiquement l'appartenance de l'orientation du capteur pour véhicule à la plage d'orientations admissibles prédéfinie en fonction de la détection par le détecteur optique d'un faisceau réfléchi sur la zone de réception.

Selon une forme de réalisation, les moyens de contrôle automatisés sont fixés à la structure.

Dans un mode de réalisation, la cible comporte une plaque de matériau au moins partiellement transparent d'un demi millimètre à deux millimètres d'épaisseur. Le niveau de transparence est choisi pour la protection de l'opérateur afin qu'il ne soit pas gêné par le faisceau laser lors de la lecture de l'information sur la grille de lecture de la plaque réceptrice. Dans le cas d'utilisation d'un détecteur optique, celui-ci est configuré pour scruter la zone de réception à travers ladite plaque depuis un côté de ladite plaque opposé à celui où se trouve le capteur pour véhicule, le niveau de transparence et la couleur de la zone de réception pouvant être distinct de celui du reste de la cible pour favoriser le contraste et faciliter la lecture de l'information

Avantageusement, la cible comporte des indicateurs superposés à la zone de réception et configurés pour permettre de déduire une inclinaison du capteur pour véhicule par rapport à la plage d'orientations admissibles prédéfinie en fonction de l'arrivée du faisceau réfléchi sur lesdits indicateurs.

L'invention concerne aussi une ligne de contrôle de l'orientation de capteurs et/ ou de radars pour véhicule installés sur une portion de véhicule, comportant un bâti configuré pour maintenir ladite portion de véhicule dans une position prédéterminée, et au moins un système tel que décrit ci-dessus, configuré pour la mesure d'un capteur installé sur la portion de véhicule, ledit système ayant sa structure fixée à demeure sur le bâti.

De préférence, la ligne de contrôle de l'orientation de capteurs pour véhicule sert à contrôler plusieurs capteurs pour véhicule installés sur la portion de véhicule etau moins un système comporte plusieurs systèmes ayant chacun sa structure fixée à demeure sur le bâti et étant chacun configuré pour la mesure de l'orientation d'une surface d'un des capteurs ou radars installé sur la portion de véhicule.

L'invention concerne également une méthode de contrôle de l'orientation de la surface d'un capteur pour véhicule grâce à un système tel que décrit ci-dessus, comportant les étapes de :
- positionner l'émetteur et la cible sur la structure dans leur position relative apte à la mesure de l'orientation de la surface du capteur pour véhicule ;
- émettre le faisceau incident sur le capteur ou sur le radar pour véhicule avec l'émetteur ;
- effectuer un contrôle de l'atteinte de la cible par le faisceau réfléchi provenant du capteur pour véhicule grâce à un opérateur et/ou grâce à des moyens de contrôle automatisés ;
- sanctionner l'appartenance de l'orientation du capteur pour véhicule à la plage d'orientations admissibles prédéfinie.

### Brève description des dessins

L'invention sera mieux comprise à l'étude détaillée d'un mode de réalisation pris à titre d'exemple non limitatif et illustré par les dessins annexés, sur lesquels :
[Fig 1] représente un système de mesure selon l'invention, en vue en perspective.
[Fig 2] représente un véhicule comportant des capteurs à ultrasons, en vue latérale.
[Fig 3] représente le bouclier arrière d'un véhicule comportant des capteurs à ultrasons, en vue de face.
[Fig 4] représente la cible utilisée dans le système selon l'invention.
[Fig 5] représente une ligne de contrôle sur laquelle est montée une portion de véhicule ayant des capteurs installés destinés à être mesurés par une pluralité de systèmes selon l'invention.

### Description détaillée

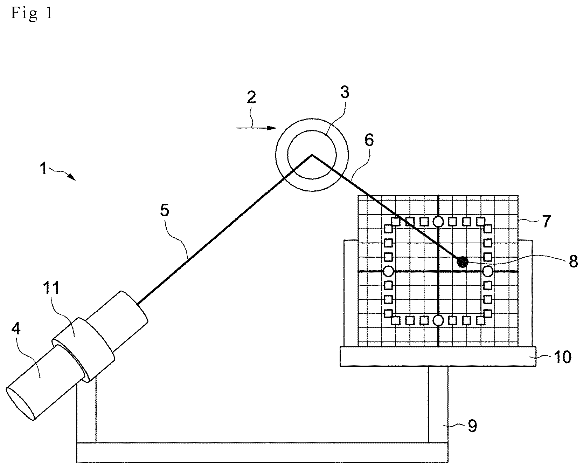

La Figure 1 illustre le système de l'invention, qui a pour objet un système de mesure 1 de l'orientation d'une surface plane pour contrôler l'orientation d'un capteur pour véhicule 3.

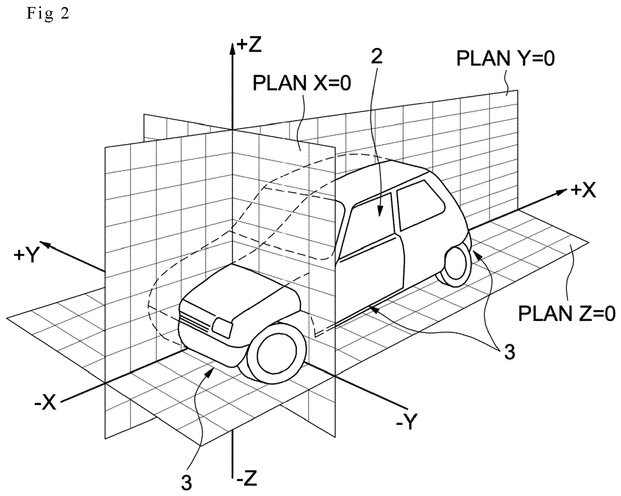

Le capteur pour véhicule 3 est destiné à être installé sur un véhicule 2 tel que celui représenté sur la Figure 2.

Pour les besoins de la description, on se référera à un repère orthonormé direct XYZ classiquement utilisé en conception automobile, dans lequel l'axe X désigne la direction longitudinale avant-arrière du véhicule, orienté vers l'arrière, l'axe Y désigne la direction transversale et est orienté vers la droite du véhicule, l'axe Z désigne la direction verticale, et est orienté vers le haut.

Le capteur 3 est par exemple un capteur à ultrasons connu dans le secteur automobile sous l'acronyme « USS » pour l'anglicisme « UltraSonic Sensor » ou sous l'acronyme « UPA » pour l'anglicisme « Ultrasonic Parking Assyst ».

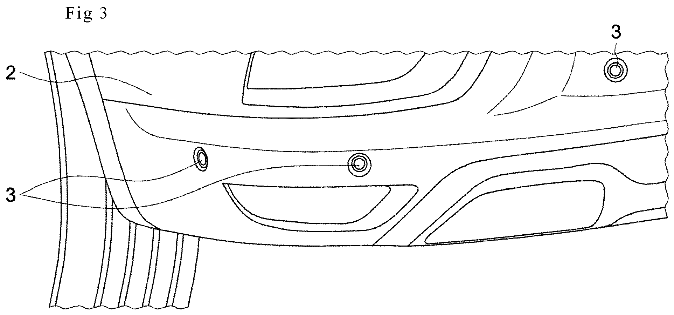

Ces capteurs, généralement au nombre de quatre à six sur un véhicule 2, sont disposés sur les boucliers avant et/ou arrière du véhicule 2, comme illustré par la Figure 3, légèrement en retrait du bouclier du véhicule 2 ou dans un funnel sur un bouclier, pour permettre au véhicule 2 de détecter des obstacles proches vers l'avant ou vers l'arrière.

Le système 1 pourrait aussi être appliqué pour l'orientation d'autres capteurs 3, par exemple des radars installés dans les crosses de bouclier d'un véhicule 2, l'emplacement du radar étant derrière la peau du bouclier du véhicule 2.

Le système 1 comporte un émetteur photonique 4 apte à émettre un faisceau lumineux directionnel 5 vers ledit capteur pour véhicule 3.

L'émetteur 4 comporte par exemple une source lumineuse cohérente, ce qui permet de fournir un faisceau lumineux unidirectionnel très précis pour la mesure, et d'identifier distinctement les faisceaux incident 5 et réfléchi 6 par rapport au capteur 3.

L'émetteur 4 peut notamment comporter un laser apte à émettre un faisceau, qui peut être un laser pointeur classique du commerce de puissance moyenne, contrairement aux techniques connues qui nécessitent plusieurs exemplaires de lasers de mesure particulièrement onéreux.

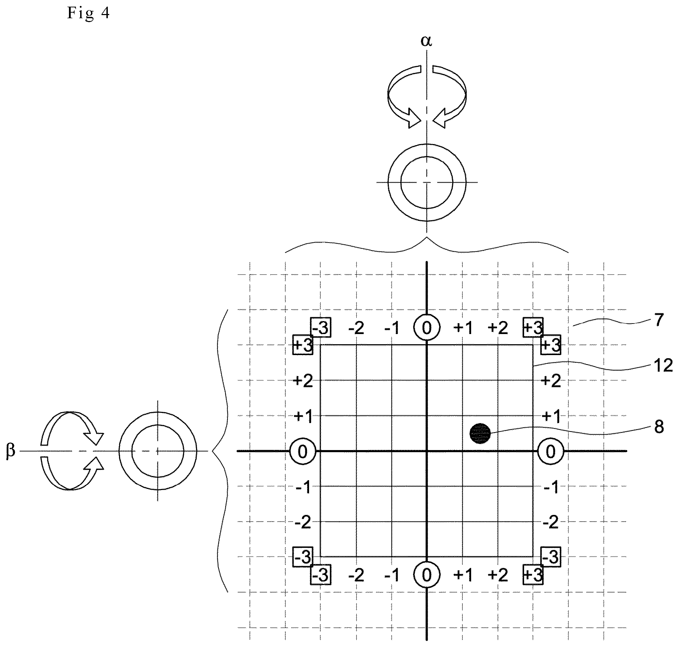

Le système 1 comporte une cible 7 ayant une zone de réception 12, telle qu'illustrée par la Figure 4, qui est par exemple une surface prédéterminée de la cible 7 correspondant à toutes les possibilités de position du point 8 pour que le diagnostic de positionnement du capteur 4 dans une plage prédéfinie des orientations admissibles soit sanctionné positivement.

La cible 7 est configurée pour pouvoir indiquer en lecture directe un défaut d'orientation du capteur en fonction du faisceau réfléchi 6 sur la zone de réception 12.

La cible 7 est par exemple configurée en taille et avec un quadrillage suffisamment grand pour permettre et faciliter la lecture directe, par un opérateur ou par un capteur, un défaut d'orientation du capteur, dans une plage offrant une marge d'orientation de l'ordre de deux à trois degrés d'angle.

Le système 1 comporte une structure 9 formant une liaison rigide entre l'émetteur photonique 4 et la cible 7, de manière à les maintenir fixement l'un par rapport à l'autre.

La structure 9 est configurée pour maintenir l'émetteur photonique 4 et la cible 7 dans une position relative telle que :
- d'une part, une émission d'un faisceau lumineux directionnel 5 par l'émetteur 4 incident sur une surface plane du capteur ou radar pour véhicule 3 entraîne une réflexion au moins partielle dudit faisceau lumineux incident 5 en un faisceau réfléchi 6 jusqu'à la zone de réception 12 lorsque le capteur ou radar 3 à ladite surface orientée dans une plage d'orientations admissibles prédéfinie.

Ainsi, après un premier étalonnage, une arrivée du faisceau réfléchi 6 sur la cible 7, en particulier sur sa zone de réception 12, permet de caractériser l'orientation du capteur pour véhicule 3.

La structure 1 permet grâce à l'utilisation d'un émetteur 4très sensible aux défauts de forme du capteur 3, nécessitant seulement un laser par capteur 3, avec une lecture directe du défaut, et sans nécessité de calculs comparatifs de positions de différents lasers, une validation régulière simple, économique et rapide de la conformité de la production d'un véhicule comportant ces capteurs 4.

Par exemple, l'angle d'incidence formé par le faisceau incident 5 sur la surface du capteur 3 est compris entre cinq et soixante-dix degrés.

L'angle d'incidence correspond par définition à l'angle entre le rayon incident 5 et la normale à la surface du capteur 4 au point d'incidence, qui est égal à l'angle entre cette normale et le rayon réfléchi 6.

L'angle d'incidence correspond également à la moitié de l'angle formé entre le rayon incident 5 et le rayon réfléchi 6.

Il doit être supérieur à cinq degrés d'angle pour éviter que le laser 4 soit dans le même espace que la cible 7 et gène l'observation de la zone de réception 12 pour le contrôle de l'arrivée de l'angle réfléchi sur cette zone 12.

L'angle d'incidence doit être inférieur à soixante-quinze degrés pour ne pas être gêner par les parois d'un éventuel cône ou funnel autour du capteur 3.

L'angle d'incidence est préférentiellement inférieur à trente-cinq degrés, la plage optimale étant de cinq à trente degrés.

Avec ces angles, tant que la dispersion de la position relative du capteur 3 par rapport à l'émetteur 4 reste dans un intervalle de tolérance de plus ou moins cinq millimètres, cela a une influence minimisée et négligeable sur la position finale du point d'arrivée 8 du rayon réfléchi 6 sur la zone de réception 12.

Cette position du point d'arrivée 8 varie alors en effet de moins de deux dixièmes de millimètres à deux cent cinquante millimètres, ce qui correspond à un défaut d'angle inférieur au dixième de degré d'angle, donc bien inférieur à la précision de lecture faite par l'œil humain sur la cible 7.

De plus, plus l'angle d'incidence est petit, plus il est facile de faire un support commun entre l'émetteur 4 et la cible 7, donc plus on minimise l'encombrement de la structure 9.

Le contrôle de la présence du point d'arrivée 8 sur la zone de réception 12 peut se faire directement à l'œil par un opérateur, ou, en alternative, le système 1 peut comporter en outre des moyens de contrôle automatisés.

Les moyens de contrôle automatisés comportent un détecteur optique adapté pour détecter l'arrivée du faisceau réfléchi 6 sur la zone de réception 12.

Les moyens de contrôle automatisés sont couplés à un moyen d'allumage de l'émetteur 4 et configurés pour sanctionner automatiquement l'appartenance de l'orientation du capteur pour véhicule 3 à la plage d'orientations admissibles prédéfinie en fonction de la détection par le détecteur optique d'un faisceau réfléchi 6 sur la zone de réception 12.

On peut opportunément imaginer aussi que le moyen de contrôle automatisé soit formé d'une caméra couplée à un logiciel de reconnaissance des images de manière à permettre de reconnaitre la position du point 8 par rapport à la grille de lecture imprimée sur le récepteur 12 (ou paramétrer dans le logiciel d'analyse de l'image) et d'obtenir de cette manière une valeur précise du défaut.

Cette précision permet de faire un suivi de la dérive de production.

On s'affranchit ainsi de l'opération de scrutation de la zone de réception 12 effectuée par un opérateur.

Avantageusement, les moyens de contrôle automatisés sont fixés à la structure 9, ce qui permet de garantir le bon maintien en position de ces moyens par rapport à la cible 7 et à l'émetteur 4.

Il est très avantageux que l'émetteur 4, notamment s'il comporte une source laser, et la cible 7, soient liés entre eux et reliés aux moyens de contrôle automatisés, puisque cela permet de les placer fixement par rapport à une modélisation nominale du véhicule généralement réalisée en conception assistée par ordinateur, et donc de rendre l'opération de contrôle répétable.

Dans un mode de réalisation, la cible 7 comporte une plaque de matériau au moins partiellement transparent d'un demi millimètre à deux millimètres d'épaisseur, et le détecteur optique est configuré pour scruter la zone de réception 12 à travers ladite plaque 7 depuis un côté de ladite plaque 7 opposé à celui où se trouve le capteur pour véhicule 3.

Ce mode de réalisation avec une cible 7 comportant une plaque de matériau au moins partiellement transparent d'un demi millimètre à deux millimètres d'épaisseur peut être réalisé avec ou sans moyens de contrôle automatisés, avec un opérateur observant ladite plaque, par exemple en regardant à travers ladite plaque.

La cible 7 est par exemple partiellement ou entièrement faite d'une fine plaque de plastique transparent comportant du plastique acrylique, par exemple du polyméthacrylate de méthyle, qui est un matériau thermoplastique transparent suffisamment léger, durable et résistant aux chocs et aux émissions photoniques pour le système 1.

On peut également utiliser du polycarbonate ou encore du polyéthylène téréphtalate, qui sont des types de plastiques thermoplastiques choisis pour leur résistance, leur durabilité et leur faible coût.

Avantageusement, la cible 7 comporte des indicateurs superposés à la zone de réception 12 et configurés pour permettre de déduire une inclinaison du capteur pour véhicule 3 par rapport à la plage d'orientations admissibles prédéfinie en fonction de l'arrivée du faisceau réfléchi 6 sur lesdits indicateurs.

Ces indicateurs, illustrés par la Figure 4, comprennent par exemple un axe orthogonal centré sur la zone de réception 12 et un quadrillage permettant de repérer l'emplacement du point d'arrivée 8 par rapport audit centre de la zone de réception 12.

La cible 7 est donc placée de telle manière par rapport à l'émetteur 4 en position nominale que le faisceau réfléchi 6 la touche en son centre au croisement des lignes verticale et horizontale.

Ainsi, s'il y a une rotation de ce capteur 3 par rapport à sa position nominale, le faisceau réfléchi 6 touche une zone de la zone de réception 12 qui est différente du centre.

Un autre système de repérage qu'un quadrillage peut être utilisé de manière équivalente comme grille de lecture, par exemple un repérage angulaire à partir d'un repère polaire.

Le repérage permet notamment de repérer si le point d'arrivée 8 arrive trop au-dessous ou, comme dans l'exemple illustré, trop au-dessus d'un axe horizontal, ce qui permet de repérer que le capteur 4 a son orientation trop tournée vers le haut selon un axe horizontal, et de repérer si le point d'arrivée 8 arrive trop à gauche ou, comme dans l'exemple illustré, trop à droite d'un axe vertical, ce qui permet de repérer que le capteur 4 a son orientation trop tournée vers la droite selon un axe vertical.

Dans l'exemple de cible 7 illustré, l'opérateur peut rechercher si le point d'arrivée 8 est dans une plage de conformité correspondant à la plage d'orientations admissibles prédéfinie du capteur 3, calculée à plus ou moins trois degrés, aussi bien pour l'axe Alpha d'azimut ou que pour l'axe Béta d'élévation.

Le quadrillage en pointillé tel qu'illustré et donné à titre d'exemple permet une lecture allant jusqu'à plus ou moins cinq degrés pour continuer les mesures en cas de défaut.

Le pas de la grille est régulier de sorte qu'une mesure avec un outil gradué peut compléter sa lecture si le défaut sort de ce quadrillage.

On peut imaginer également une analyse de la forme du point d'arrivée 8 en complément de sa position sur la zone de réception 12, puisqu'il aura tendance à être de section sensiblement ronde au centre et à se déformer vers des formes elliptiques en fonction de son éloignement du centre.

Les indicateurs permettent d'apporter plus d'informations sur la position du capteur 3 en fonction du point d'arrivée 8 du rayon réfléchi 6 sur la zone de réception 12.

Par exemple, les indicateurs forment des repères angulaires, positionnels, ou un quadrillage, qui sont par exemple sérigraphiés sur la cible 7.

Dans le cas d'indicateurs amenés à être scrutés à l'œil par un observateur, une matière moins transparente comme le polypropylène vierge peut être utilisée pour la cible 7.

Cette transparence limitée permet un compactage des moyens de contrôle et facilite le confort oculaire de la personne pour la lecture directe des indicateurs lorsqu'il relève la mesure.

On adaptera donc l'épaisseur et le matériau de la plaque en plastique 7, qui peut être plus ou moins transparente, de manière à ne pas avoir de risque de gène oculaire pour l'opérateur lors de la lecture répétée des résultats, suivant la force de l'émetteur 4, notamment s'il s'agit d'un laser.

Il est recommandé d'utiliser une plaque de faible épaisseur par exemple un à deux millimètres d'épaisseur maximum, ce qui permet d'éviter que la déviation de la lumière lors de sa traversé de la matière de la cible 7 n'ait pas une influence importante sur la précision de la mesure.

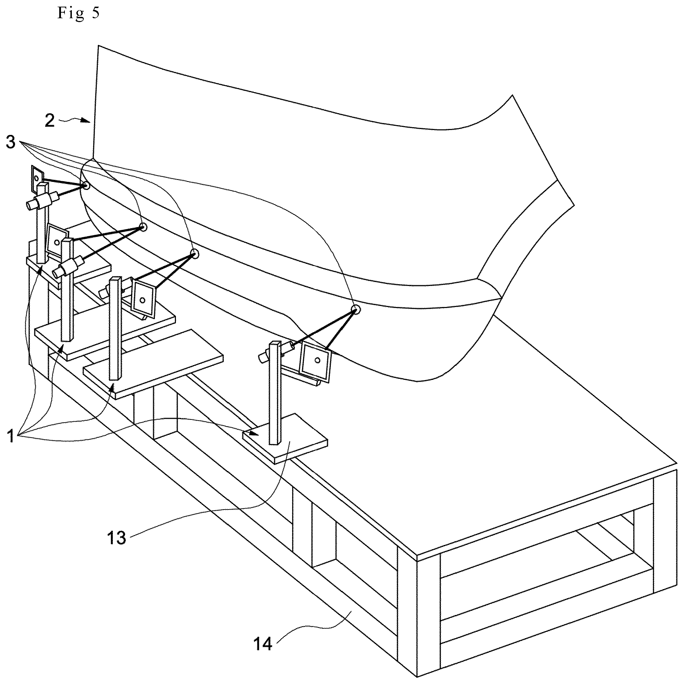

Comme illustré par la Figure 5, le système 1 peut être utilisé seul ou en plusieurs exemplaires de manière à former une ligne de contrôle de l'orientation de capteurs pour véhicule 3 installés sur une portion de véhicule 2, comportant un bâti 14 configuré pour maintenir ladite portion de véhicule 2 dans une position prédéterminée, et au moins un système 1 tel que décrit précédemment, ledit système 1 étant configuré pour la mesure d'un capteur installé sur la portion de véhicule 2, et ledit système 1 ayant sa structure 9 fixée à demeure sur le bâti 14.

Les extensions 10,11 qui supportent les couples d'émetteurs 4 et de cibles 7 sont montés à demeure sur le bâti 14, préférentiellement également fixement par rapport aux moyens de contrôle pour leur mise en référence, par exemple grâce à des piétements 13 boulonnés sur le bâti 14.

Une extension 11 soutenant l'émetteur 4 peut comporter en outre des moyens d'orientation angulaire 11 pour son réglage en position par rapport à un capteur 4 donné installé sur une portion de véhicule 2 donnée.

Les couples d'émetteurs 4 et de cibles 7 peuvent être écartés d'environs trente centimètres du bouclier fixé sur les moyens de contrôle, de manière à pouvoir monter et démonter les boucliers à tester sans avoir besoin de les retirer.

Lorsque les cibles 7 sont assemblées ainsi sur les moyens de contrôle, l'opérateur peut lire directement les résultats sur lesdites cibles 7.

De préférence, la ligne de contrôle de l'orientation de capteurs pour véhicule 3 sert à contrôler plusieurs capteurs pour véhicule 3 installés sur la portion de véhicule 2, et la ligne prévoit plusieurs systèmes 1 ayant chacun sa structure 9 fixée à demeure sur le bâti 14 et étant chacun configuré pour la mesure de l'orientation d'une surface d'un des capteurs installé sur la portion de véhicule 2.

L'invention concerne également une méthode de contrôle de l'orientation de la surface d'un capteur pour véhicule 3 grâce à un système 1 ou sur une ligne de contrôle, la méthode comportant les étapes de :
- positionner l'émetteur 4 et la cible 7 sur la structure 9 dans leur position relative apte à la mesure de l'orientation de la surface du capteur pour véhicule 3 ;
- émettre le faisceau incident 5 sur le capteur pour véhicule 3 avec l'émetteur 4 ;
- effectuer un contrôle de l'atteinte du faisceau réfléchi 6 provenant du capteur pour véhicule 3 grâce à un opérateur et/ou grâce à des moyens de contrôle automatisés ;
- sanctionner l'appartenance de l'orientation du capteur pour véhicule 3 à la plage d'orientations admissibles prédéfinie.

On réalise ainsi un système 1 à un seul faisceau lumineux, qui est particulièrement compacte et qui permet une intégration plus simple sur une ligne de contrôle, et dont la mise en œuvre est une méthode simple car très peu sensible aux défauts de forme du bouclier de l'ordre de plus ou moins trois millimètres.

Enfin, la lecture du défaut est directe et peut être automatisée aisément par l'ajout d'un système de détection, sans besoin de scanner le bouclier ni de traitement lourd de l'information.

Cette mise en œuvre, plus rapide et moins chère, peut être utilisée régulièrement pour valider la conformité de la production de véhicules 2 notamment automobiles comportant des capteurs UPA ou USS 3 ainsi que pour des radars placés sur la face techniques des boucliers.

## Revendications

1. Système de mesure de l'orientation d'une surface (1) pour contrôler l'orientation d'un capteur pour véhicule (3), comportant un émetteur photonique (4) apte à émettre un faisceau lumineux directionnel (5) vers une surface plane dudit capteur ou radar pour véhicule (3), une cible (7) ayant une zone de réception (12), une structure (9) formant une liaison rigide entre l'émetteur photonique (4) et la cible (7) et configurée pour maintenir l'émetteur photonique (4) et la cible (7) dans une position relative telle qu'une émission d'un faisceau lumineux directionnel (5) par l'émetteur (4) incident sur ladite surface du capteur ou radar pour véhicule (3) entraîne une réflexion au moins partielle dudit faisceau lumineux incident (5) en un faisceau réfléchi (6) jusqu'à la zone de réception (12) lorsque ladite surface est orientée dans une plage d'orientations admissibles prédéfinie, la cible étant en outre configurée pour indiquer en lecture directe un défaut d'orientation du capteur en fonction du faisceau réfléchi (6) sur la zone de réception (12), **caractérisé en ce que** l'angle d'incidence formé par le faisceau incident (5) sur la surface du capteur (3) est compris entre cinq et soixante-dix degrés, préférentiellement inférieure à trente-cinq degrés.

2. Système (1) selon la revendication 1, dans lequel l'émetteur (4) comporte une source lumineuse cohérente telle qu'un laser.

3. Système (1) selon l'une quelconque des revendications 1 ou 2, comportant en outre des moyens de contrôle automatisés comportant un détecteur optique adapté pour détecter l'arrivée du faisceau réfléchi (6) sur la zone de réception (12), les moyens de contrôle automatisés étant couplés à un moyen d'allumage de l'émetteur (4) et configurés pour sanctionner automatiquement l'appartenance de l'orientation du capteur pour véhicule (3) à la plage d'orientations admissibles prédéfinie en fonction de la détection par le détecteur optique d'un faisceau réfléchi (6) sur la zone de réception (12).

4. Système (1) selon l'une quelconque des revendications 1 à 3, dans lequel les moyens de contrôle automatisés sont fixés à la structure (9).

5. Système (1) selon l'une quelconque des revendications 3 ou 4, dans lequel la cible (7) comporte une plaque de matériau au moins partiellement transparent d'un demi millimètre à deux millimètres d'épaisseur, et le détecteur optique est configuré pour scruter la zone de réception (12) à travers ladite plaque (7) depuis un côté de ladite plaque (7) opposé à celui où se trouve le capteur pour véhicule (3).

6. Système (1) selon l'une quelconque des revendications 1 à 5, dans lequel la cible (7) comporte des indicateurs superposés à la zone de réception (12) et configurés pour permettre de déduire une inclinaison du capteur pour véhicule (3) par rapport à la plage d'orientations admissibles prédéfinie en fonction de l'arrivée du faisceau réfléchi (6) sur lesdits indicateurs.

7. Ligne de contrôle de l'orientation de capteurs et/ou radars pour véhicule (3) installé sur une portion de véhicule (2), comportant un bâti (14) configuré pour maintenir ladite portion de véhicule (2) dans une position prédéterminée, et au moins un système (1) selon l'une quelconque des revendications 1 à 6 configuré pour la mesure d'au moins un capteur installé sur la portion de véhicule (2), ledit système (1) ayant sa structure (9) fixée à demeure sur le bâti (14).

8. Ligne de contrôle de l'orientation de capteurs et/ou radars pour véhicule (3) selon la revendication 7, dans laquelle plusieurs capteurs pour véhicule (3) sont installés sur la portion de véhicule (2) et l'au moins un système (1) comporte plusieurs systèmes (1) ayant chacun sa structure (9) fixée à demeure sur le bâti (14) et étant chacun configuré pour la mesure de l'orientation d'une surface d'un des capteurs ou radars installés sur la portion de véhicule (2).

9. Méthode de contrôle de l'orientation d'une surface d'un capteur pour véhicule (3) grâce à un système (1) selon l'une quelconque des revendications 1 à 6, comportant les étapes de :
- positionner l'émetteur (4) et la cible (7) sur la structure (9) dans leur position relative apte à la mesure de l'orientation de la surface du capteur pour véhicule (3) ;
- émettre le faisceau incident (5) sur le capteur ou sur le radar pour véhicule (3) avec l'émetteur (4) ;
- effectuer un contrôle de l'atteinte de la cible par le faisceau réfléchi (6) provenant du capteur pour véhicule (3) grâce à un opérateur et/ou grâce à des moyens de contrôle automatisés ;
- sanctionner l'appartenance de l'orientation du capteur pour véhicule (3) à la plage d'orientations admissibles prédéfinie.

## Patentansprüche

1. System zur Messung der Ausrichtung einer Fläche (1) zum Kontrollieren der Ausrichtung eines Sensors (3) für ein Fahrzeug, umfassend einen photonischen Emitter (4), der in der Lage ist, einen gerichteten Lichtstrahl (5) zu einer planen Fläche des Sensors (3) oder Radars für ein Fahrzeug auszusenden, ein Ziel (7), das einen Empfangsbereich (12) hat, eine Struktur (9), die eine starre Verbindung zwischen dem photonischen Emitter (4) und dem Ziel (7) bildet und dazu ausgestaltet ist, den photonischen Emitter (4) und das Ziel (7) in einer relativen Position zu halten, so dass ein Aussenden eines gerichteten Lichtstrahls (5) durch den Emitter (4), der auf die Fläche des Sensors (3) oder Radars für ein Fahrzeug einfällt, zu einer mindestens partiellen Reflexion des einfallenden Lichtstrahls (5) als reflektierter Strahl (6) bis zu dem Empfangsbereich (12) führt, wenn die Fläche in einem vordefinierten Bereich zulässiger Ausrichtungen ausgerichtet ist, wobei das Ziel ferner dazu ausgestaltet ist, unter direkter Ablesung einen Ausrichtungsfehler des Sensors in Abhängigkeit von dem reflektierten Strahl (6) auf dem Empfangsbereich (12) anzuzeigen, **dadurch gekennzeichnet, dass** der Einfallswinkel, der durch den auf die Fläche des Sensors (3) einfallenden Strahl (5) gebildet wird, zwischen fünf und siebzig Grad, bevorzugt weniger als fünfunddreißig Grad, beträgt.

2. System (1) nach Anspruch 1, **dadurch gekennzeichnet, dass** der Emitter (4) eine kohärente Lichtquelle wie einen Laser umfasst.

3. System (1) nach einem der Ansprüche 1 oder 2, umfassend ferner automatisierte Kontrolleinrichtungen, die einen optischen Detektor umfassen, der dazu geeignet ist, das Eintreffen des reflektierten Strahls (6) auf dem Empfangsbereich (12) zu detektieren, wobei die automatischen Kontrolleinrichtungen mit einer Einrichtung zum Einschalten des Emitters (4) gekoppelt sind und dazu ausgestaltet sind, die Zugehörigkeit der Ausrichtung des Sensors (3) für ein Fahrzeug zu dem vordefinierten Bereich zulässiger Ausrichtungen in Abhängigkeit von der Detektion eines reflektierten Strahls (6) auf dem Empfangsbereich (12) durch den optischen Detektor automatisch zu bestätigen.

4. System (1) nach einem der Ansprüche 1 bis 3, wobei die automatisierten Kontrolleinrichtungen an der Struktur (9) befestigt sind.

5. System (1) nach einem der Ansprüche 3 oder 4, wobei das Ziel (7) eine Platte aus mindestens teilweise transparentem Material mit einer Dicke von einem halben Millimeter bis zwei Millimeter umfasst und der optische Detektor dazu ausgestaltet ist, den Empfangsbereich (12) durch die Platte (7) hindurch von einer Seite der Platte (7) aus, die entgegengesetzt zu derjenigen ist, auf der sich der Sensor (3) für ein Fahrzeug befindet, abzusuchen.

6. System (1) nach einem der Ansprüche 1 bis 5, wobei das Ziel (7) Indikatoren umfasst, die dem Empfangsbereich (12) überlagert sind und dazu ausgestaltet sind, zu ermöglichen, eine Neigung des Sensors (3) für ein Fahrzeug in Bezug auf den vordefinierten Bereich zulässiger Ausrichtungen in Abhängigkeit von dem Eintreffen des reflektierten Strahls (6) auf den Indikatoren abzuleiten.

7. Anlage zur Kontrolle der Ausrichtung von Sensoren (3) und/oder Radaren für ein Fahrzeug, die an einem Fahrzeugabschnitt (2) installiert sind, umfassend ein Gestell (14), das dazu ausgestaltet ist, den Fahrzeugabschnitt (2) in einer vorbestimmten Position zu halten, und mindestens ein System (1) nach einem der Ansprüche 1 bis 6, das zum Messen mindestens eines an dem Fahrzeugabschnitt (2) installierten Sensors ausgestaltet ist, wobei die Struktur (9) des Systems (1) dauerhaft an dem Gestell (14) befestigt ist.

8. Anlage zur Kontrolle der Ausrichtung von Sensoren und/oder Radaren (3) für ein Fahrzeug nach Anspruch 7, wobei mehrere Sensoren (3) für ein Fahrzeug an dem Fahrzeugabschnitt (2) installiert sind und das mindestens eine System (1) mehrere Systeme (1) umfasst, deren Struktur (9) jeweils dauerhaft an dem Gestell (14) befestigt ist und die jeweils zum Messen der Ausrichtung einer Fläche eines der an dem Fahrzeugabschnitt (2) installierten Sensoren oder Radare ausgestaltet sind.

9. Verfahren zur Kontrolle der Ausrichtung einer Fläche eines Sensors (3) für ein Fahrzeug mithilfe eines Systems (1) nach einem der Ansprüche 1 bis 6, umfassend die folgenden Schritte:
- Positionieren des Emitters (4) und des Ziels (7) auf der Struktur (9) in ihrer relativen Position, die zum Messen der Ausrichtung der Fläche des Sensors (3) für ein Fahrzeug geeignet ist;
- Aussenden des auf den Sensor (3) oder das Radar für ein Fahrzeug einfallenden Strahls (5) mit dem Emitter (4);
- Durchführen einer Kontrolle des Erreichens des Ziels durch den reflektierten Strahl (6), der von dem Sensor (3) für ein Fahrzeug kommt, mithilfe einer Bedienperson und/oder mithilfe von automatisierten Kontrolleinrichtungen;
- Bestätigen der Zugehörigkeit der Ausrichtung des Sensors (3) für ein Fahrzeug zu dem vordefinierten Bereich zulässiger Ausrichtungen.

## Claims

1. System for measuring the orientation of a surface (1) with a view to inspecting the orientation of a vehicle sensor (3), comprising a photonic emitter (4) suitable for emitting a directional light beam (5) towards a planar surface of said vehicle sensor or radar (3), a target (7) having a receiving region (12), a structure (9) forming a rigid link between the photonic emitter (4) and the target (7) and configured to keep the photonic emitter (4) and the target (7) in a relative position such that emission by the emitter (4) of a directional light beam (5) incident on said surface of the vehicle sensor or radar (3) causes an at least partial reflection of said incident light beam (5) into a beam (6) reflected to the receiving region (12) when said surface is oriented within a predefined range of allowable orientations, the target further being configured to indicate through direct read-out a sensor orientation fault based on the reflected beam (6) in the receiving region (12), **characterized in that** the angle of incidence made by the incident beam (5) on the surface of the sensor (3) is between five and seventy degrees, and preferably less than thirty five degrees.

2. System (1) according to Claim 1, wherein the emitter (4) comprises a coherent light source such as a laser.

3. System (1) according to either of Claims 1 and 2, further comprising automated inspecting means comprising an optical detector configured to detect the point of arrival of the reflected beam (6) in the receiving region (12), the automated inspecting means being coupled to a means for switching on the emitter (4) and being configured to automatically validate that the orientation of the vehicle sensor (3) belongs to the predefined range of allowable orientations based on the detection by the optical detector of a reflected beam (6) in the receiving region (12).

4. System (1) according to any of Claims 1 to 3, wherein the automated inspecting means are secured to the structure (9).

5. System (1) according to either of Claims 3 and 4, wherein the target (7) comprises a sheet of material that is at least partially transparent and that is from half a millimetre to two millimetres in thickness, and the optical detector is configured to scan the receiving region (12) through said sheet (7) from a side of said sheet (7) opposite the side on which the vehicle sensor (3) is located.

6. System (1) according to any of Claims 1 to 5, wherein the target (7) comprises indicators that are superposed on the receiving region (12) and that are configured to allow an inclination of the vehicle sensor (3) with respect to the predefined range of allowable orientations to be deduced based on the point of arrival of the reflected beam (6) on said indicators.

7. Line for inspecting the orientation of vehicle sensors and/or radars (3) installed in a vehicle part (2), comprising a framework (14) configured to keep said vehicle part (2) in a predetermined position, and at least one system (1) according to any of Claims 1 to 6 configured to measure at least one sensor installed on the vehicle part (2), said system (1) having its structure (9) fixedly secured to the framework (14).

8. Line for inspecting the orientation of vehicle sensors and/or radars (3) according to Claim 7, wherein a plurality of vehicle sensors (3) are installed in the vehicle part (2) and the at least one system (1) comprises a plurality of systems (1) each having its structure (9) fixedly secured to the framework (14) and each being configured to measure the orientation of a surface of one of the sensors or radars installed in the vehicle part (2).

9. Method for inspecting the orientation of a surface of a vehicle sensor (3) by means of a system (1) according to any of Claims 1 to 6, comprising the steps of:
- positioning the emitter (4) and the target (7) on the structure (9) in their relative position suitable for measuring the orientation of the surface of the vehicle sensor (3);
- emitting the incident beam (5) onto the vehicle sensor or radar (3) with the emitter (4);
- an operator and/or automated inspecting means inspecting whether the target is struck by the beam (6) reflected by the vehicle sensor (3);
- validating whether the orientation of the vehicle sensor (3) belongs to the predefined range of allowable orientations.
